# DEMANDE DE BREVET EUROPEEN

(11) **EP 4 109 691 A2**
(43) Date de publication de la demande: **28.12.2022**
(21) Numéro de dépôt: 22181458.5
(22) Date de dépôt: 28.06.2022
(51) Int. Cl.: H02G 1/08

(54) **DISPOSITIF DE GUIDAGE MURAL ET PROCEDE DE GUIDAGE ASSOCIE**

(30) Priorité: 03.05.2021 FR 2104621
(71) Demandeur: Volta Services, 69330 Jonage (FR)
(72) Inventeur: SALERNO, Romain, 69330 JONAGE (FR)
(74) Mandataire: Demulsant, Xavier

(57) **Abrégé**

L'invention concerne un dispositif de guidage (10) d'au moins un câble ou d'au moins une gaine dans les réservations d'au moins un mur ; ledit dispositif de guidage (10) comportant :
- au moins une tête (12-13) destinée à être insérée dans une première ouverture dudit au moins un mur et déplacée dans lesdites réservations de sorte à atteindre une seconde ouverture dudit au moins un mur ; et
- un corps (11) relié à ladite au moins une tête (12-13) et destiné à guider les déplacements de ladite au moins une tête (12-13) dans lesdites réservations ;
ladite au moins une ladite tête (12-13) et ledit corps (11) étant réalisés en matière plastique ; ledit corps (11) présentant une épaisseur comprise entre 3 et 5 mm et une largeur comprise entre 15 et 25 mm.

## Description

### DOMAINE DE L'INVENTION

La présente invention concerne un dispositif de guidage mural, c'est-à-dire un dispositif permettant d'insérer un câble ou une gaine dans les réservations d'un ou plusieurs murs. L'invention concerne également le procédé de guidage associé.

L'invention trouve une application particulièrement avantageuse pour effectuer la pose de câbles ou de gaines entre des ouvertures d'un ou plusieurs murs rapidement et à moindre effort.

### ETAT ANTERIEUR DE LA TECHNIQUE

En électricité, il est nécessaire de passer des gaines et des câbles dans les murs pour acheminer l'électricité à différentes prises, interrupteurs, sources de lumière ou actionneurs. Pour ce faire, la technique la plus couramment utilisée consiste à réaliser deux ouvertures dans un ou plusieurs murs et à former une saignée entre ces ouvertures. Une gaine ou un câble est alors placé à l'intérieur de cette saignée avant de la reboucher, par exemple au moyen d'un enduit.

Ce procédé est particulièrement long, et le découpage du mur pour réaliser les saignées génère beaucoup de poussière, qu'il convient ensuite de nettoyer. En outre, le rebouchage des saignées nécessite généralement l'application d'un premier enduit de rebouchage, qu'il faut ensuite poncer avant d'appliquer un enduit de lissage pour garantir l'aspect esthétique du mur après incorporation de la gaine ou du câble.

Pour éviter ces travaux laborieux, il est connu de passer des gaines ou des câbles sans saignée dans des réservations murales. Par exemple, lorsque les murs sont réalisés en plaques de plâtre, ces plaques étant généralement fixées sur des structures métalliques formant ainsi des réservations entre les plaques de plâtre et la maçonnerie. En effectuant deux trous, par exemple à la scie cloche, au niveau d'une ou plusieurs plaques de plâtre, il est possible de passer une gaine en insérant la gaine dans une première ouverture puis en déplaçant la gaine dans la réservation jusqu'à ce que la gaine ressorte par la seconde ouverture. Ainsi, il n'est pas toujours nécessaire de réaliser une saignée entre deux ouvertures, facilitant ainsi le travail d'un électricien pour intégrer une gaine ou un câble dans un mur.

Cependant, le déplacement de la gaine ou du câble entre deux ouvertures d'une cloison est souvent un processus complexe, surtout si les ouvertures sont distantes de plus d'un mètre.

Pour permettre le guidage de la gaine ou du câble entre deux ouvertures d'une cloison, il est connu d'utiliser un fil à plomb avec une tête métallique et un aimant puissant. Avec ce dispositif, la tête métallique du fil à plomb est insérée dans une première ouverture, de sorte à atteindre une réservation disposée derrière la paroi du mur à travers laquelle la première ouverture est réalisée. L'aimant est alors disposé sur cette paroi, de sorte à obtenir une liaison magnétique entre la tête du fil à plomb et l'aimant à travers la paroi. En déplaçant l'aimant sur la paroi, il est alors possible de guider la tête métallique du fil à plomb dans les réservations jusqu'à la seconde ouverture et d'extraire la tête métallique du fil à plomb de la seconde ouverture. Lorsque la tête du fil à plomb est extraite de la seconde ouverture, le fil du fil à plomb s'étend entre les deux ouvertures et il est possible de scotcher très solidement une extrémité du fil à plomb pour tirer la gaine à travers les deux ouvertures.

Cette technique par magnétisme présente des limites à cause des éléments métalliques présents dans le mur pouvant entrainer des déplacements non souhaités de l'aimant et la perte de la liaison entre la tête métallique et l'aimant. En outre, les déplacements de l'aimant entrainent également des salissures dues aux frottements de l'aimant sur la cloison.

En variante, il est également possible d'utiliser une aiguille composite pour guider les déplacements d'un câble ou d'une gaine entre deux ouvertures d'une cloison, telle que l'aiguille « AS2002 » vendue par la société « La perche diffusion ». Cette aiguille présente un corps composite souple et une tête métallique affutée en acier permettant de découper les cloisons alvéolaires pour atteindre les réservations. Pour déplacer l'aiguille entre deux ouvertures d'une cloison, la tête métallique de l'aiguille composite est placée dans une première ouverture. Ensuite, le corps composite de cette aiguille est inséré dans la première ouverture par des mouvements successifs de va-et-vient avec un angle précis par rapport à la cloison de sorte que la tête métallique soit guidée en direction de la seconde ouverture.

Lorsque la tête métallique apparait au niveau de la seconde ouverture, celle-ci peut être extraite de la seconde ouverture, de sorte à scotcher solidement un câble ou une gaine sur celle-ci.

En tirant l'aiguille depuis la première ouverture, le câble ou la gaine peut ainsi être entrainé depuis la seconde ouverture vers la première ouverture en même temps que l'aiguille est tirée depuis la première ouverture.

Lors des déplacements de l'aiguille entre les deux ouvertures, le corps composite souple permet à la tête de modifier son orientation dans les réservations, par exemple pour contourner des marches présentes dans ces réservations.

En effet, certaines réservations présentent des marches qui peuvent s'étendre entre les deux ouvertures de la cloison. Par exemple, ces marches peuvent apparaître lorsque la maçonnerie comporte une surépaisseur de béton à la jonction entre deux parpaings.

L'inconvénient majeur de cette aiguille réside dans la direction précise qu'il faut imposer lors de l'insertion de l'aiguille dans la première ouverture pour que la tête métallique atteigne la seconde ouverture. En effet, lorsque la longueur du corps insérée dans la première ouverture est supérieure à la distance entre les deux ouvertures et que la tête métallique n'est pas apparue au niveau de la seconde ouverture, la tête métallique a souvent dépassé la seconde ouverture sans déboucher au niveau de cette seconde ouverture. Cette situation peut se produire parce que la tête a été déviée lors de l'insertion du corps ou parce que la tête n'a pas été correctement insérée dans la première ouverture en direction de la seconde ouverture.

Dans ces deux cas, il est malheureusement nécessaire de retirer complètement l'aiguille de la première ouverture et de retenter d'insérer l'aiguille dans les réservations pour atteindre la seconde ouverture. En pratique, il est particulièrement délicat de déplacer cette aiguille entre deux ouvertures distantes de plusieurs mètres à cause de cette contrainte majeure.

En outre, le manque de flexibilité du corps risque d'abimer les bords des ouvertures ménagées dans la cloison et la tête métallique présente un risque d'électrocution lors de l'insertion de la tête dans la première ouverture.

Le problème technique de l'invention et donc d'obtenir un dispositif de guidage permettant de déplacer au moins un câble ou une gaine entre deux ouvertures d'une cloison de manière efficace pour des ouvertures distantes de plus d'un mètre, tout en permettant de contourner les éventuelles marches présentes dans les réservations.

### EXPOSE DE L'INVENTION

L'invention propose de répondre à ce problème technique au moyen d'un dispositif de guidage présentant une tête et un corps réalisés en matière plastique avec une épaisseur comprise entre 3 et 5 mm et une largeur comprise entre 15 et 25 mm et non conductrice.

En effet, l'invention est issue d'une observation selon laquelle les propriétés spécifiques de ce corps permettent d'imprimer un mouvement de rotation au dispositif de guidage lorsque la longueur du corps insérée dans la première ouverture est supérieure à la distance entre les deux ouvertures et que la tête n'est pas apparue au niveau de la seconde ouverture. Ce mouvement de rotation permet de déplacer le dispositif de guidage jusqu'à ce que la tête ou le corps apparaisse au niveau de la seconde ouverture sans qu'il ne soit nécessaire d'extraire et de réinsérer le dispositif de guidage dans la première ouverture.

En outre, la matière plastique, la largeur et l'épaisseur du corps permettent également d'imprimer des formes dans le corps pour pouvoir passer une plusieurs marches de la maçonnerie afin d'atteindre la seconde ouverture. En effet, contrairement aux solutions connues qui utilisent des corps souples pour contourner les marches des réservations, l'invention propose d'utiliser les capacités de déformation de la matière plastique pour contourner les marches bloquantes.

Avec le dispositif de guidage de l'invention, lorsque la tête du dispositif de guidage de l'invention bute contre une marche d'une réservation lors des déplacements de la tête par insertion du corps dans la première ouverture, la largueur et l'épaisseur du corps ne permettent pas au corps de se déformer pour contourner la marche et il devient nécessaire d'extraire le dispositif de guidage. La largeur et l'épaisseur du corps offrent néanmoins la possibilité de déformer le corps du dispositif de guidage manuellement, afin d'imprimer une forme spécifique au dispositif de guidage permettant de contourner la marche bloquante.

Ensuite, le dispositif de guidage peut être une nouvelle fois introduit dans la première ouverture avec la forme imprimée manuellement de sorte à passer la première marche détectée et ainsi de suite jusqu'à arriver à la seconde ouverture. A l'issue du passage du câble ou de la gaine, le corps peut être une nouvelle fois déformé manuellement pour retrouver sa forme originelle.

Ainsi, contrairement à l'aiguille « AS 2002 » de l'état de la technique, l'invention propose donc une solution plus contraignante pour passer les différentes marches des réservations puisqu'il est nécessaire d'extraire le dispositif de guidage et d'imprimer une forme manuellement pour passer ces marches.

Cependant, le dispositif de guidage de l'invention est beaucoup plus efficace pour atteindre des ouvertures distantes de plusieurs mètres, car il devient possible de déplacer la tête lorsque la longueur du corps insérée dans la première ouverture est supérieure à la distance entre les deux ouvertures.

Selon un premier aspect, l'invention concerne donc un dispositif de guidage d'au moins un câble ou d'au moins une gaine dans les réservations d'au moins un mur ; ledit dispositif de guidage comportant :
- au moins une tête destinée à être insérée dans une première ouverture dudit au moins un mur et déplacée dans lesdites réservations de sorte à atteindre une seconde ouverture dudit au moins un mur ; et
- un corps relié à ladite au moins une tête et destiné à guider les déplacements de ladite au moins une tête dans lesdites réservations.

L'invention se caractérise en ce que ladite au moins une ladite tête et ledit corps sont réalisés en matière plastique ; ledit corps présentant une épaisseur comprise entre 3 et 5 mm et une largeur comprise entre 15 et 25 mm.

L'invention permet d'atteindre facilement des ouvertures distantes de plusieurs mètres car la rigidité du corps permet de déplacer la tête lorsque celle-ci a dépassé la seconde ouverture. En outre, la matière plastique et les dimensions du corps permettent également d'imprimer manuellement des formes au corps pour passer les éventuelles marches des réservations.

Pour obtenir efficacement ces propriétés de déformation, la matière plastique de ladite au moins une ladite tête et dudit corps correspond préférentiellement à du polychlorure de vinyle. Par exemple, la matière plastique peut correspondre à du polychlorure de vinyle de type PVC-U selon la norme DIN EN ISO 1163-1. Cette matière plastique peut comporter une densité, mesurée selon la norme ISO 1183 (DIN 53479), comprise entre 1.3 et 1.5 g/cm³ ainsi qu'un module d'élasticité, mesuré sur la norme ISO 527-2 (DIN 53457), compris entre 2500 et 3000 N/mm².

Cette matière plastique peut être obtenue sous la forme de plaques de plusieurs mètres carrés avec la caractéristique d'épaisseur recherchée et une longueur suffisante par rapport à la longueur recherchée pour le dispositif de guidage. La longueur du dispositif de guidage peut varier sans changer l'invention et en fonction des besoins, par exemple le dispositif de guidage peut présenter une longueur de 2, 3, 4 ou 5 mètres.

Pour former le dispositif de guidage à partir d'une plaque, une découpe au laser ou au moyen d'une machine-outil numérique peut être réalisée pour former le corps et ladite au moins une tête du dispositif de guidage. De préférence, plusieurs dispositifs de guidage sont ainsi formés simultanément et les chutes peuvent être recyclées.

Selon un mode de réalisation, au moins une tête correspond à une tête biseautée présentant des bords crénelés destinés à assurer le maintien d'au moins une gaine. La forme biseautée de la tête permet de faciliter son insertion dans les réservations. En outre, les bords de cette forme biseautée, c'est-à-dire les côtés de la tête biseautée formant le biais, sont structurés de sorte à obtenir un ensemble de crans. Les crans de la tête biseautée permettent de fixer des gaines de différents diamètres, par exemple des gaines de diamètre 16, 20 ou 25 mm sur la première tête biseautée. Ainsi, lorsque le dispositif de guidage a été inséré entre les deux ouvertures et qu'il ressort de la seconde ouverture, la tête biseautée peut être utilisée pour fixer une gaine de sorte à tirer le dispositif de guidage depuis la première ouverture en entraînant le déplacement de la gaine dans les réservations.

Contrairement aux dispositifs connus qui nécessitent l'utilisation de rubans adhésifs, les crans de la tête biseautée coopèrent avant les nervures internes des gaines classiques pour fixer la gaine sur la tête biseautée par déformation de la gaine. Il s'ensuit qu'il est beaucoup plus rapide de passer une gaine car il n'est plus nécessaire de la solidariser au dispositif de guidage et elle peut être fixée de manière temporaire par coopération des crans avec les nervures internes de celle-ci.

Pour obtenir une coopération efficace, lesdits bords crénelés présentent préférentiellement des crans en forme de demi-cercles avec un diamètre compris entre 1.2 et 3 mm.

Outre la tête biseautée, le dispositif de guidage peut également comporter une autre tête destinée à être insérée dans la première ouverture pour des types de cloison ou de réservations spécifiques.

Ainsi, selon un mode de réalisation, au moins une tête correspond à une tête arrondie, par exemple une tête dont l'épaisseur est aiguisée de sorte à former un bord tranchant permettant la découpe d'alvéoles en carton.

En variante, d'autres formes de tête peuvent être utilisées sans changer l'invention en fonction des propriétés des réservations et des éventuels matériaux à traverser pour atteindre ces réservations.

Par ailleurs, il peut être recherché de détecter si la longueur du corps insérée dans la première ouverture est égale à la distance entre les deux ouvertures, pour détecter s'il faut continuer à insérer le corps dans la première ouverture ou s'il est préférable d'imposer une rotation du corps pour détecter la tête au niveau de la seconde ouverture. Pour ce faire, ledit corps présente préférentiellement au moins une échelle graduée s'étendant sur la longueur dudit corps depuis au moins une tête. De préférence, le corps présente une échelle graduée imprimée sur un bord et sur une ou deux faces. Ces échelles sont configurées pour mesurer la distance depuis l'une ou l'autre des extrémités du dispositif de guidage, de sorte à pouvoir facilement détecter si la longueur du corps insérée dans la première ouverture est égale à la distance entre les deux ouvertures en connaissant la distance entre les deux ouvertures et la longueur insérée dans la première ouverture.

Selon un second aspect, l'invention concerne un procédé de guidage d'un câble ou d'une gaine au moyen du dispositif de guidage selon le premier aspect de l'invention, ledit procédé comportant les étapes suivantes :
- placement d'une tête dudit dispositif de guidage dans une première ouverture d'un mur ;
- déplacement de ladite tête dans au moins une réservation au moyen d'une insertion dudit corps dans ladite première ouverture en direction d'une seconde ouverture ;
- lorsque la longueur du corps insérée dans ladite première ouverture est supérieure ou égale à la distance entre les deux ouvertures, déplacement de ladite tête en rotation autour de ladite première ouverture jusqu'à ce que ladite tête apparaisse dans ladite seconde ouverture ;
- extraction de ladite tête de ladite seconde ouverture ;
- fixation d'un câble ou d'une gaine sur une extrémité dudit dispositif de guidage ;
- traction sur l'autre extrémité dudit dispositif de guidage de sorte que ledit dispositif de guidage soit extrait des réservations en entrainent ledit câble ou ladite gaine ; et
- désolidarisation dudit câble ou de ladite gaine dudit dispositif de guidage.

### BREVE DESCRIPTION DES FIGURES

L'invention sera bien comprise à la lecture de la description qui suit, dont les détails sont donnés uniquement à titre d'exemple, et développée en relation avec la figure annexée qui illustre une vue de dessus d'un dispositif de guidage selon un mode de réalisation de l'invention.

### DESCRIPTION DETAILLEE DE L'INVENTION

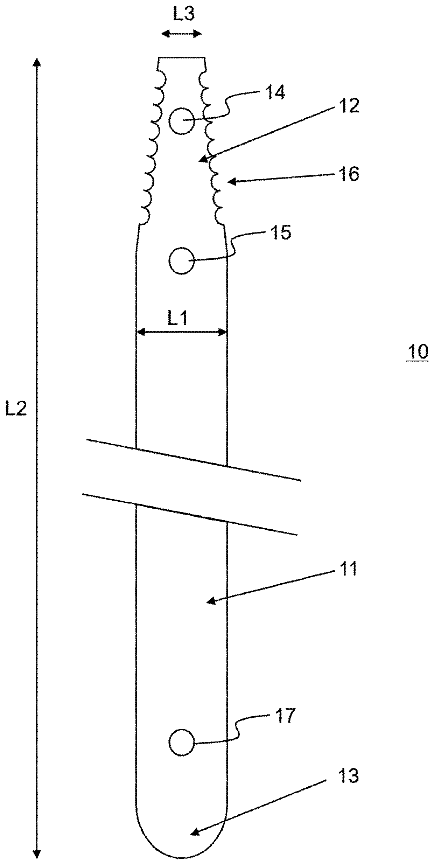

Tel qu'illustré sur la figure 1, le dispositif de guidage **10** selon l'invention peut être obtenu au moyen d'une seule pièce en matière plastique dans laquelle est formé un corps **11,** une tête biseautée **12** et une tête arrondie **13.** Les têtes **12** et **13** viennent de matière avec le corps **11** formant ainsi la longueur **L2** totale du dispositif de guidage **10.** La figure illustre uniquement une version tronquée de cette longueur **L2** puisque celle-ci peut être particulièrement longue. Par exemple, la longueur **L2** du dispositif de guidage **10** peut s'étendre sur 2, 3, 4 ou 5 m. Bien entendu, d'autres longueurs **L2** du dispositif de guidage **10** peuvent être utilisées en fonction des applications visées. Selon l'invention, le dispositif de guidage **10** présente une largeur **L1** comprise entre 15 et 25 mm et une épaisseur comprise entre 3 et 5 mm.

La matière plastique formant le corps **11** et les têtes **12** et **13** correspond préférentiellement à du polychlorure de vinyle de type PVC-U, tel que décrit selon la norme DIN EN ISO 1163-1. Par exemple, la matière plastique peut comporter une densité d'environ 1,44 g/cm³ et un module d'élasticité d'environ 2700 N/mm². Alternativement, la matière plastique formant le corps **11** et les têtes **12** et **13** peut correspondre à du polycarbonate avec une densité d'environ 1,20 g/cm³ ou à du polyester avec une densité de 1,27 ou 1,33 g/cm³.

La tête biseautée **12** présente une largeur avant **L3** inférieure à la largeur **L1** du corps **11** de sorte à présenter des bords **16** en biais. Par exemple, la largeur **L3** peut être comprise entre 8 et 12 mm. Le biais ainsi formé sur les bords **16** est préférentiellement crénelé de sorte à permettre la fixation des nervures internes d'une gaine par déformation de celle-ci.

Plus précisément, le bord crénelé **16** peut être formé par des crans successifs en forme de demi-cercle avec un diamètre compris entre 1.2 et 3 mm.

Pour fixer une gaine sur les bords crénelés **16** de la tête biseautée **12,** la gaine peut être déformée en appuyant sur l'extrémité de celle-ci de sorte à obtenir une extrémité de section sensiblement ovoïde contrairement à la section naturelle de la gaine classiquement circulaire. Cette section ovoïde permet d'insérer la tête biseautée **12** profondément dans la gaine jusqu'à ce que les bords biseautés **16** entrent en contact de la plus grande longueur de la forme ovoïde de la gaine. La pression appliquée sur la gaine peut ensuite être relâchée si bien que la force exercée au niveau de l'extrémité de la gaine pour revenir dans sa position naturelle d'une section circulaire est appliquée sur les bords biseautés **16.** En outre, la gaine présentant des nervures internes, les crans formés au niveau des bords biseautés **16** viennent coopérer avec les nervures internes de la gaine pour fixer suffisamment solidement la gaine à l'extrémité biseautée **16** pour ne pas avoir à la scotcher.

En variante, il est également possible de fixer un câble ou une gaine en les scotchant ou par tout autre moyen de fixation sur une extrémité de dispositif de guidage **10.** Par exemple, le dispositif de guidage **10** présente préférentiellement des alésages **14, 15** et **17** au niveau desquels un câble peut être fixé.

Outre la tête biseautée **12,** le dispositif de guidage **10** comporte également une tête arrondie **13** permettant de faciliter l'insertion du dispositif de guidage **10** dans des cloisons sèches et dans les réservations remplies de laine de verre.

Quelle que soit la forme des têtes utilisées, le procédé de guidage d'un câble ou d'une gaine s'effectue par une première étape de placement d'une des têtes **12** et **13** dans une première ouverture d'un mur. Cette ouverture est, par exemple, précédemment réalisée avec une scie cloche dans une cloison de ce mur. Pour déplacer le dispositif de guidage dans des réservations de ce mur, par exemple des réservations formées entre la maçonnerie et la cloison, la tête est déplacée dans ces réservations au moyen d'une insertion du corps **11** dans la première ouverture. Cette insertion doit être réalisée en direction de la seconde ouverture de sorte que la tête insérée dans la première ouverture se déplace naturellement en direction de la seconde ouverture.

Lors de ses déplacements, des marches peuvent bloquer la progression de la tête et il est alors nécessaire de retirer l'ensemble dispositif de guidage **10** pour imprimer une forme au corps **11** afin de passer cette marche.

Typiquement, le corps **11** peut être plié vers le haut à quelques centimètres de la tête insérée dans la première ouverture afin que la tête longe la cloison lors de ses déplacements dans les réservations et évite de buter au niveau des bourrelets de ciment formés entre les parpaings de la maçonnerie.

Il est ensuite nécessaire d'insérer une longueur de corps **11** suffisante pour atteindre la seconde ouverture. Pour ce faire, le corps **11** présente préférentiellement des échelles graduées permettant de connaître la longueur du dispositif de guidage **10** insérée dans la première ouverture. En connaissant la distance entre les deux ouvertures, il est possible de détecter lorsque la longueur du dispositif de guidage insérée dans la première ouverture correspond à la distance entre les deux ouvertures si bien que la tête insérée dans la première ouverture devrait donc apparaître au niveau de la seconde ouverture. Lorsque les ouvertures sont distantes d'au moins un mètre, il est assez rare que la tête apparaisse directement au niveau de la seconde ouverture et l'invention permet alors de déplacer le corps **11** au niveau de la première ouverture jusqu'à ce que la tête apparaisse dans la seconde ouverture.

Ce mouvement appliqué sur le corps **11** pour déplacer la tête dans les réservations s'apparente à un mouvement de rotation dont l'axe correspond à l'axe de la première ouverture. Classiquement, il est souvent nécessaire d'effectuer des déplacements en rotation de seulement quelques degrés pour voir apparaître la tête au niveau de la seconde ouverture.

Lorsque la tête du dispositif de guidage **10** apparaît au niveau de la seconde ouverture, elle peut être extraite de cette seconde ouverture de sorte à obtenir un dispositif de guidage dont les deux extrémités ressortent des deux ouvertures. Un câble ou une gaine peut alors être fixé sur l'une ou l'autre des extrémités du dispositif de guidage **10** en fonction des besoins. Par exemple, si le bord arrondi **13** a été utilisé pour réaliser le déplacement de dispositif de guidage **10** dans les réservations, l'autre bord biseauté **12** peut être utilisé pour fixer un câble ou une gaine en utilisant tous les moyens connus.

Lorsque le câble ou la gaine est fixé sur l'une des extrémités, l'autre extrémité est utilisée pour tirer le dispositif de guidage **10** jusqu'à obtenir son retrait complet des réservations.

Lorsque le dispositif de guidage **10** est tracté par une de ses extrémités, l'autre extrémité se déplace dans une ouverture puis dans l'ensemble des réservations avant de ressortir par l'autre ouverture, entraînant avec lui le passage du câble de la gaine.

Le câble ou la gaine peut alors être désolidarisé du dispositif de guidage **10** et la forme du corps **11** peut être restaurée. Le dispositif de guidage **10** peut alors être stocké, enroulé sur lui-même.

À la fin de ce processus, un câble ou une gaine a été passée entre deux ouvertures d'un mur sans nécessiter la réalisation de tranchées et de manière plus simple et plus rapide que les dispositifs de guidage existants.

La réalisation du corps **11** sous la forme d'un plat, d'une bande présente de nombreux avantages. Dans une mise en œuvre, la matière plastique formant le corps peut être obtenue sous forme de plaque, le dispositif de guidage étant formé par découpe, plusieurs dispositifs de guidage pouvant être formés simultanément. L'épaisseur du corps est avantageusement comprise entre 3 et 5 mm, et la largeur du corps est avantageusement comprise entre 15 et 25 mm. Le corps comprend avantageusement, sur une ou deux de ses faces, une échelle graduée. Le dispositif de guidage peut avantageusement être stocké enroulé sur lui-même.

## Revendications

1. Dispositif de guidage (10) d'au moins un câble ou d'au moins une gaine dans les réservations d'au moins un mur ; ledit dispositif de guidage (10) comportant :
- au moins une tête (12-13) destinée à être insérée dans une première ouverture dudit au moins un mur et déplacée dans lesdites réservations de sorte à atteindre une seconde ouverture dudit au moins un mur ; et
- un corps (11) relié à ladite au moins une tête (12-13) et destiné à guider les déplacements de ladite au moins une tête (12-13) dans lesdites réservations ; ***caractérisé en ce que*** ladite au moins une ladite tête (12-13) et ledit corps (11) sont réalisés en matière plastique ; ledit corps (11) présentant une épaisseur comprise entre 3 et 5 mm et une largeur comprise entre 15 et 25 mm.

2. Dispositif de guidage selon la revendication 1, ***dans lequel*** la matière plastique de ladite au moins une ladite tête (12-13) et dudit corps (11) correspond à du polychlorure de vinyle.

3. Dispositif de guidage selon la revendication 1 ou 2, ***dans lequel*** ladite au moins une tête correspond à une tête biseautée (12) présentant des bords crénelés (16) destinés à assurer le maintien d'au moins une gaine.

4. Dispositif de guidage selon la revendication 3, ***dans lequel*** lesdits bords crénelés (16) présentent préférentiellement des crans en forme de demi-cercles avec un diamètre compris entre 1.2 et 3 mm.

5. Dispositif de guidage selon l'une des revendications 1 à 4, ***dans lequel*** au moins une tête correspond à une tête arrondie (13).

6. Dispositif de guidage selon l'une des revendications 1 à 5, ***dans lequel*** ledit corps (11) présente préférentiellement au moins une échelle graduée s'étendant sur la longueur dudit corps (11) depuis au moins une tête (12-13).

7. Procédé de de guidage d'un câble ou d'une gaine au moyen du dispositif de guidage (10) selon l'une des revendications 1 à 6, ledit procédé comportant les étapes suivantes :
- placement d'une tête (12, 13) dudit dispositif de guidage (10) dans une première ouverture d'un mur ;
- déplacement de ladite tête (12, 13) dans au moins une réservation au moyen d'une insertion dudit corps (11) dans ladite première ouverture en direction d'une seconde ouverture ;
- lorsque la longueur du corps (11) insérée dans ladite première ouverture est supérieure ou égale à la distance entre les deux ouvertures, déplacement de ladite tête (12, 13) en rotation autour de ladite première ouverture jusqu'à ce que ladite tête (12, 13) apparaisse dans ladite seconde ouverture ;
- extraction de ladite tête (12, 13) de ladite seconde ouverture ;
- fixation d'un câble ou d'une gaine sur une extrémité dudit dispositif de guidage (10) ;
- traction sur l'autre extrémité dudit dispositif de guidage (10) de sorte que ledit dispositif de guidage (10) soit extrait des réservations en entrainent ledit câble ou ladite gaine ; et
- désolidarisation dudit câble ou de ladite gaine dudit dispositif de guidage (10).
